# FASCICULE DE BREVET EUROPEEN

(11) **EP 2 534 396 B1**
(45) Date de publication et mention de la délivrance du brevet: **30.10.2013**
(21) Numéro de dépôt: 11708910.2
(22) Date de dépôt: 09.02.2011
(51) Int. Cl.: F16H 59/04, G01D 5/14

(54) **DISPOSITIF DE DETECTION DE LA POSITION NEUTRE D'UN LEVIER DE COMMANDE DU PASSAGE ET DE LA SELECTION DES VITESSES D'UNE BOITE DE VITESSES D'UN VEHICULE AUTOMOBILE**
VORRICHTUNG ZUR ERKENNUNG DER NEUTRALEN POSITION EINES HEBELS ZUM WÄHLEN UND SCHALTEN VON GÄNGEN IN EINEM MOTORFAHRZEUGGETRIEBE
DEVICE FOR DETECTING THE NEUTRAL POSITION OF A LEVER FOR CONTROLLING SHIFTING AND SELECTING OF GEARS IN A MOTOR VEHICLE GEARBOX

(30) Priorité: 11.02.2010 FR 1050959
(43) Date de publication de la demande: 19.12.2012
(73) Titulaire: Dura Automotive Systems SAS, 91570 Bièvres (FR)
(72) Inventeur: FARGES, Thomas, F-91940 Gometz-Le Chatel (FR)
(74) Mandataire: Thivillier, Patrick
(86) Numéro de dépôt international: PCT/FR2011/050268
(87) Numéro de publication internationale: WO 2011/098721

(56) Documents cités:
- WO-A1-2009/141807
- DE-A1-102007 026 303
- FR-A1- 2 930 309
- FR-A1- 2 934 345
- US-A- 6 027 426

## Description

L'invention se rattache au secteur technique des boîtes de vitesses de véhicules automobiles.

Plus particulièrement, l'invention concerne un dispositif de détection de la position neutre d'un levier de commande et trouve une application avantageuse dans le cas d'une boîte de vitesses mécanique.

D'une manière parfaitement connue pour un homme du métier, le levier, ou autre organe actionneur, est monté avec capacité de déplacement angulaire, généralement dans un boîtier support, fixé au niveau de l'habitacle du véhicule. Le levier est agencé pour assurer la commande de la sélection et du passage des vitesses.

Différentes solutions ont été proposées pour détecter la position du levier afin de connaître ses déplacements et, par conséquent, sa position précise dans l'espace. Par exemple, le document FR 2.930.309, dont le demandeur de la présente est également titulaire et qui divulgue un dispositif selon le préambule de la revendication 1, concerne un dispositif apte à donner des informations précises sur les différentes positions et les sens de déplacement du levier de commande.

Dans ce but, un capteur à effet Hall est monté sur une partie fixe du boîtier support où est articulé le levier, en regard d'un aimant porté par ledit levier, afin d'indiquer les différents déplacements et positionnements du levier, selon trois axes perpendiculaires x, y, z.

A partir de ce concept de base, le problème que se propose de résoudre l'invention est de pouvoir détecter, d'une manière simple et efficace, la position du levier au point neutre notamment, ce qui s'avère important pour des véhicules équipés de systèmes aptes à couper l'alimentation du moteur lorsque le véhicule est arrêté pendant une durée prédéterminée, afin de permettre le redémarrage du véhicule lorsque le conducteur appuie sur la pédale d'accélérateur.

Le document WO 2008/155289 considère comme connu d'utiliser un capteur de position de la boîte de vitesses et émettant un signal de sortie représentatif de la position du point neutre. Plus particulièrement, le but recherché dans ce document est de vérifier l'intégrité du signal de sortie émis à chaque instant, quel que soit le type de défaut susceptible de se produire.

Pour atteindre cet objectif, ce document propose de combiner le capteur de position avec une unité de traitement de signal comportant un convertisseur analogique numérique apte à convertir le signal analogique en signal de sortie numérique pour fournir une information périodique prédéfinie correspondant à la position du point neutre lorsque deux conditions cumulatives sont remplies, à savoir qu'un aimant est dans la position du point neutre et que le capteur est en état de fonctionnement normal.

A partir de cet état de la technique, notamment en complément de l'enseignement du document FR 2.930.309, il est apparu important de préciser la nature et le positionnement du moyen apte à détecter les déplacements du levier, afin d'être totalement indépendant du déplacement du levier correspondant à la sélection des vitesses, ce qui permet de détecter simplement, d'une manière sûre et efficace, le point neutre

Pour résoudre un tel problème, il a été conçu et mis au point un dispositif de détection de la position neutre d'un levier de commande et de sélection d'une boîte de vitesse d'un véhicule automobile monté avec capacité de déplacement en relation avec des moyens aptes à détecter lesdits déplacements et à envoyer des signaux électriques dans une unité de traitement.

Selon l'invention, les moyens sont constitués par un aimant cylindrique d'aimantation axiale et orienté suivant l'axe de rotation du levier correspondant à la sélection des vitesses et par un capteur disposé en regard dudit aimant.

Un autre problème que se propose de résoudre l'invention est d'avoir un champ magnétique maximum sur la plage réduite de la zone correspondant au point neutre, afin d'améliorer la précision de mesure.

Pour résoudre un tel problème, le capteur est disposé en regard de l'aimant, en position point neutre.

Avantageusement, le capteur est une sonde unidirectionnelle à effet Hall. L'aimant est intégré dans une rotule d'articulation du levier, tandis que le capteur est monté sur une partie fixe, telle que le support où est articulé ledit levier.

Comme indiqué, l'invention trouve une application particulièrement avantageuse lorsque le véhicule est équipé d'un système connu sous le nom de « STOP AND START » associé à une boîte de vitesses manuelle.

Dans ce but, lorsque la position de l'aimant en regard du capteur est détectée, au bout d'un temps déterminé, un signal électrique est envoyé à l'unité de traitement pour autoriser la coupure éventuelle de l'alimentation du moteur du véhicule.

L'invention est exposée ci-après plus en détail à l'aide des figures des dessins annexés dans lesquels :

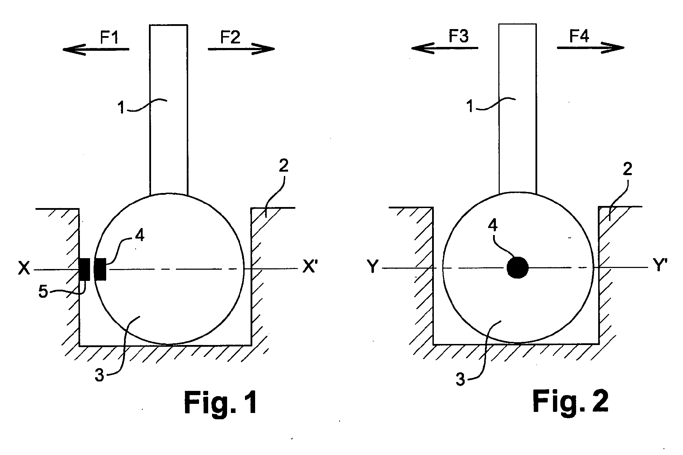

- la figure 1 est une vue à caractère purement schématique montrant le montage de l'aimant cylindrique dans la rotule d'articulation du levier et son positionnement par rapport au capteur monté sur une partie fixe, l'axe x-x' correspondant à l'axe de sélection des vitesses ;
- la figure 2 est une vue de côté correspondant à la figure 1, l'axe y-y' correspondant à l'axe de passage des vitesses.

D'une manière parfaitement connue pour un homme du métier, le levier de commande (1) pour la commande du passage et de la sélection des vitesses, est monté avec capacité de déplacement angulaire dans un boîtier support (2), par exemple. Le montage avec capacité de déplacement angulaire du levier (1) s'effectue au moyen d'une rotule (3). Le pied de levier (1) est agencé pour être accouplé avec tout type d'actionneur, pour le passage et la sélection des vitesses.

Sur les figures des dessins et comme indiqué, x-x' correspond à l'axe de sélection, y-y' correspond à l'axe de passage, tandis que les flèches F1 et F2 correspondent au sens de déplacement du levier (1) pour le passage des vitesses et les flèches F3 et F4 correspondent au déplacement du levier (1) pour la sélection des vitesses.

Selon l'invention, pour détecter la position neutre du levier (1), un aimant cylindrique (4), d'aimantation axiale, est orienté suivant l'axe de sélection, x-x' du levier (1) correspondant à la sélection des vitesses. L'aimant (4) est intégré dans la rotule d'articulation (3) et est donc disposé coaxialement à l'axe x-x'. Au regard de l'aimant (4), est disposé un capteur (5) monté sur une partie fixe, notamment sur une partie du boîtier (2). Le capteur (5) est avantageusement constitué par une sonde à effet Hall.

D'une manière importante, compte tenu du positionnement de l'aimant (4), d'une manière coaxiale à l'axe de sélection x-x', l'évolution du champ magnétique capté par la sonde à effet Hall (5), est indépendante du mouvement de sélection symbolisé par les flèches F3 et F4. Il en résulte que l'évolution du champ magnétique est unidirectionnelle et strictement liée au mouvement de passage du levier, symbolisé par les flèches F1 et F2. Autrement dit, le signal électrique est indépendant de la position du levier suivant l'axe de sélection x-x'.

D'une manière avantageuse, la sonde à effet Hall (5) est située en regard de l'aimant (4) en position du neutre du levier (1).

Ces dispositions permettent d'avoir le champ magnétique maximum sur la plage réduite de la zone du point neutre améliorant par conséquent la précision de la mesure.

D'une manière connue, les signaux émis par l'ensemble du capteur (4) - sonde (5), sont envoyés à une unité de traitement.

L'invention trouve une application particulière lorsque le véhicule est équipé d'un système « STOP AND START » associé à une boîte de vitesses manuelle. Ainsi, lorsque la position de l'aimant (4), en regard de la sonde (5), est détectée, au bout d'un temps prédéterminé, un signal électrique est envoyé à l'unité du traitement pour autoriser la coupure éventuelle de l'alimentation du moteur du véhicule.

Les avantages ressortent bien de la description. En particulier, on souligne et on rappelle qu'une sonde unidirectionnelle est suffisante pour détecter le déplacement du levier en passage et, par conséquent, fournir un signal permettant de détecter la position du point neutre.

## Revendications

1. Dispositif de détection de la position neutre d'un levier de commande (1) du passage et de la sélection des vitesses d'une boîte de vitesses d'un véhicule automobile, monté avec capacité de déplacements en relation avec des moyens (4, 5) aptes à détecter lesdits déplacements et à envoyer des signaux électriques dans une unité de traitement, **caractérisé en ce que** les moyens sont constitués par un aimant cylindrique (4) d'aimantation axiale et orienté suivant l'axe de rotation (x-x') du levier (1) correspondant à la sélection des vitesses et par un capteur (5) disposé en regard dudit aimant (4), de sorte que les signaux électriques sont indépendants de la position angulaire du levier autour de l'axe de sélection des vitesses.

2. Dispositif selon la revendication 1, **caractérisé en ce que** le capteur (5) est disposé en regard de l'aimant (4), en position point neutre.

3. Dispositif selon l'une des revendications 1 et 2, **caractérisé en ce que** le capteur (5) est une sonde unidirectionnelle à effet Hall.

4. Dispositif selon l'une des revendications 1 à 3, **caractérisé en ce que** l'aimant (4) est intégré dans une rotule d'articulation (3) du levier (1), tandis que le capteur (5) est monté sur une partie fixe (2).

5. Dispositif selon la revendication 1, **caractérisé en ce que**, lorsque la position de l'aimant (4) en regard du capteur (5) est détectée, au bout d'un temps déterminé, un signal électrique est envoyé à l'unité de traitement pour couper l'alimentation du moteur du véhicule.

## Patentansprüche

1. Vorrichtung zur Erfassung der Neutralstellung eines Steuerhebels (1) zum Umstellen und Wählen der Gänge eines Schaltgetriebes eines Kraftfahrzeugs, die mit einer Befähigung zu Verschiebungen in Bezug auf Mittel (4, 5) angebracht ist, die in der Lage sind, die Verschiebungen zu erfassen und elektrische Signale in eine Verarbeitungseinheit zu senden, **dadurch gekennzeichnet, dass** die Mittel aus einem zylindrischen Magneten (4) mit axialer und entlang der Drehachse (x - x') des Hebels (1), entsprechend der Auswahl der Gänge ausgerichteter Magnetisierung und einem dem Magneten (4) zugewandten Sensor (5) bestehen, so dass die elektrischen Signale von der Winkelstellung des Hebels um die Gangwahlachse unabhängig sind.

2. Vorrichtung nach Anspruch 1, **dadurch gekennzeichnet, dass** der Sensor (5) in der Neutralstellung dem Magneten (4) zugewandt angeordnet ist.

3. Vorrichtung nach einem der Ansprüche 1 und 2, **dadurch gekennzeichnet, dass** der Sensor (5) ein unidirektionaler Hall-Effekt-Fühler ist.

4. Vorrichtung nach einem der Ansprüche 1 bis 3, **dadurch gekennzeichnet, dass** der Magnet (4) in ein Drehgelenk (3) des Hebels (1) integriert ist, während der Sensor (5) an einem feststehenden Teil (2) angebracht ist.

5. Vorrichtung nach Anspruch 1, **dadurch gekennzeichnet, dass**, wenn die dem Sensor (5) zugewandte Stellung des Magneten (4) erfasst wird, am Ende einer vorbestimmten Zeit ein elektrisches Signal an die Verarbeitungseinheit gesendet wird, um die Versorgung des Motors des Fahrzeugs zu unterbrechen.

## Claims

1. A device for detecting the neutral position of a lever (1) for controlling the gear shifting and selection of a gearbox of a motor vehicle, assembled with the ability to displace in relation with means (4, 5) capable of detecting said displacements and of sending electric signals to a processing unit, **characterized in that** the means are formed of a cylindrical magnet (4) having an axial magnetization and arranged along the rotation axis (x-x') of the lever (1) corresponding to the gear selection and of a sensor (5) arranged opposite to said magnet (4), so that the electric signals are independent from the angular position of the lever around the gear selection axis.

2. The device of claim 1, **characterized in that** the sensor (5) is arranged opposite to the magnet (4), in neutral position.

3. The device of claim 1 and 2, **characterized in that** the sensor (5) is a unidirectional Hall-effect probe.

4. The device of any of claims 1 to 3, **characterized in that** the magnet (4) is integrated in a ball joint (3) of the lever (1), while the sensor (5) is assembled on a fixed portion (2).

5. The device of claim 1, **characterized in that**, when the position of the magnet (4) opposite to the sensor (5) is detected, after a determined time, an electric signal is sent to the processing unit to cut off the power supply of the vehicle motor.
